(19) Europäisches Patentamt
European Patent Office
Office européen des brevets

(11) **EP 4 455 679 A1**

(12) **EUROPEAN PATENT APPLICATION**
published in accordance with Art. 153(4) EPC

(43) Date of publication:
**30.10.2024 Bulletin 2024/44**

(21) Application number: **22911350.1**

(22) Date of filing: **22.12.2022**

(51) International Patent Classification (IPC):
*G01N 35/08* (2006.01)     *B01J 19/00* (2006.01)
*B81B 1/00* (2006.01)      *G01N 37/00* (2006.01)

(52) Cooperative Patent Classification (CPC):
**B01J 19/00; B81B 1/00; G01N 35/08; G01N 37/00**

(86) International application number:
**PCT/JP2022/047386**

(87) International publication number:
**WO 2023/120648 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2021   JP 2021209399**

(71) Applicant: National University Corporation
**TOYOHASHI UNIVERSITY OF TECHNOLOGY
Toyohashi-shi,
Aichi 441-8580 (JP)**

(72) Inventors:
• **SHIBATA Takayuki
Toyohashi-shi, Aichi 441-8580 (JP)**
• **NATSUHARA Daigo
Toyohashi-shi, Aichi 441-8580 (JP)**
• **OKAMOTO Shunya
Toyohashi-shi, Aichi 441-8580 (JP)**
• **NAGAI Moeto
Toyohashi-shi, Aichi 441-8580 (JP)**

(74) Representative: **Kuhnen & Wacker
Patent- und Rechtsanwaltsbüro PartG mbB
Prinz-Ludwig-Straße 40A
85354 Freising (DE)**

(54) **FLUID DISPENSING DEVICE IN MICROCHANNEL AND MICROCHANNEL DEVICE**

(57) [Problem] To provide a fluid dispensing device having branch channels unlimited in number, and a microfluidic device including the dispensing device. [Solution] A dispensing device (100) comprises branch channels (5) branching from a main channel (3), and an air exhaust channel (4) at ends of the branch channels. The main channel includes first in-channel resistant parts (8) arranged respectively near and on a downstream side of branching positions (31, 32) of the branch channels (5), and the air exhaust channel includes second in-channel resistant parts (9) near merging positions (41). Each of the first in-channel resistant parts generates a greater surface tension disruption pressure than pressure generated by channel resistance from a branching position to a second in-channel resistant part. Each of the second in-channel resistant parts generates a greater surface tension disruption pressure than a sum of the surface tension disruption pressure of each of the first in-channel resistant parts and pressures generated by channel resistances from a first in-channel resistant part to a subsequent first in-channel resistant part, and from a subsequent branching position to a subsequent second in-channel resistant part. A microfluidic device includes this dispensing device.

**FIG. 2**

**Description**

**Technical Field**

The present invention relates to a fluid dispensing device for dispensing fluid from a main channel to a plurality of branch channels in microchannels, and a micro device including the dispensing device.

**Background Art**

A plurality of virus tests (gene amplification reactions) generally require the number of markers corresponding to the number of virus tests and the number of reactions corresponding to the number of objects to be inspected, so it is necessary to prepare samples and reagents each time. Accordingly, practice of such virus tests requires expertise and skills. Examples of the gene amplification reactions include polymerase chain reaction (PCR) and loop-mediated isothermal amplification (LAMP). The PCR is a technique for amplifying DNA using a synthetic enzyme and primers under three-stage temperature control. The LAMP is a technique for amplifying a target DNA base sequence using primers and a synthetic enzyme with strand displacement activity. When any of these gene amplification reactions is employed, a plurality of tests require a plurality of reaction chambers.

Such a plurality of virus tests as mentioned above are sometimes used to find infectious diseases, for example, those caused by arthropod-borne viruses (e.g., Dengue fever and Zika fever). These tests are performed by fixing primers for amplifying causal genes to the infectious diseases in reaction chambers and adding a mixture of gene samples collected from arthropods and a gene amplification reagent to the primers in the reaction chambers. Also, a similar kind of virus tests are performed by using PCR for the recently prevalent novel coronavirus infectious disease, COVID-19. Moreover, such a plurality of reaction chambers are used not only in virus tests but also in gene tests for finding food allergens, such as wheat, buckwheat and peanuts, contained in very small amounts in processed food or illegal drugs such as cannabis.

On the other hand, biological analysis often employs inspection apparatuses using microchips such as μ-TAS (Micro Total Analysis Systems). Such inspection apparatuses enable very small amounts of samples to react. Such inspection apparatuses include microchannels and are designed to supply a predetermined inspection fluid to reaction chambers. An inspection apparatus has been developed which has a main channel and branch channels so as to supply the same inspection fluid simultaneously to a plurality of reaction chambers, and supplies the inspection fluid to the plurality of reaction chambers by way of the main channel (See PTL1).

**Citation List**

**Patent Literature**

PTL 1: JP 2009-284769 A

**NON-Patent Literature**

NPL 1: Lecture proceedings of academic lecture of 2018 JSPE Autumn Conference, G02-12, pp.772-773

**Summary of Invention**

**Technical Problem**

The technique disclosed in PTL 1 is to form a plurality of branch channels from a main channel, arrange containers (reaction chambers) in the branch channels and connect air discharge parts to the containers in order to attain smooth liquid supply to the containers. Owing to the air discharge parts, liquid is smoothly supplied to the containers. However, transport of liquid through the main channel and the branch channels becomes also smooth, which results in unstable storage of the liquid supplied to the individual containers (reaction chambers) and may cause mutual contamination of the stored liquids.

The present inventors have developed a dispensing device capable of supplying appropriate amounts of liquid to reaction chambers provided in respective branch channels without backflow by arranging in-channel resistant parts at appropriate positions in the main channel and the branch channels and making the in-channel resistant parts behave as valves. In this technique, the in-channel resistant parts in the dispensing device have a shallow bottom structure in which channel bottom surfaces are raised, and the shallow-bottomed parts are given an inclination with respect to a channel direction. The magnitude of resistance (surface tension disruption pressure) is adjusted by the inclination and thus liquid supplied to the main channel is allowed to be dispensed sequentially to the branch channels from an upstream side (See NPL 1).

However, since the in-channel resistant parts in this technique have a shallow bottom structure in which channel bottom surfaces are raised, fabrication by soft lithography requires multiple patterning in order to raise the channel bottom surfaces and it is difficult to form channel cross sections of the shallow-bottomed parts with precision. Besides, when surface tension disruption pressure is adjusted by an inclination angle of each of the shallow-bottomed parts with respect to the channel direction, it is true that the surface tension disruption pressure can be adjusted by the inclination angle of each of the shallow-bottomed parts. However, when the inclination angle is smaller than 45° with respect to the channel direction, the magnitude of resistance is small, so the inclination angle needs to be adjusted in the range of approximately 90° to 45°. As a result, a difference in surface tension disruption pressure is small and there is a difficulty in arranging a large number of branch channels.

Under these circumstances, the present inventors have further developed a dispensing device which can be easily fabricated by soft lithography (Japanese Patent Application No.2020-190959). This dispensing device includes in-channel resistant parts which exert different resistant pressures (surface tension disruption pressures) upstream side and downstream side branch channels, and allows fluid to be dispensed to a plurality of branch channels. This technique is to arrange branch channels in accordance with a difference in resistant pressure (surface tension disruption pressures) given by the in-channel resistant parts. However, when a large number of branch channels are arranged, the in-channel resistant parts cannot give a sufficient pressure difference and there is a limit in the number of branch channels arranged (the number of branches to be dispensable). There is therefore a desire for a dispensing device capable of dispensing fluid to a large number of branch channels in some kinds of tests, and for a dispensing device having an unlimited number of branch channels when a large number of kinds of reaction results are to be obtained.

The present invention has been made in view of the above circumstances. It is an object of the present invention to provide a fluid dispensing device unlimited in number of branch channels and a microfluidic device including the dispensing device.

## Solution to Problem

A fluid dispensing device in microchannels according to the present invention comprises a main channel allowing fluid to flow down in one direction, a plurality of branch channels branching from the main channel, and a common air exhaust channel with which the plurality of branch channels merge at terminal ends, and dispenses fluid flowing down in the main channel sequentially to the plurality of branch channels from an upstream side of the main channel, wherein the main channel includes first in-channel resistant parts arranged respectively in proximity to and on a downstream side of branching positions of the plurality of branch channels; the plurality of branch channels respectively include chamber region parts increased in channel cross-sectional area between the branching positions in the main channel and merging positions in the air exhaust channel; and the air exhaust channel includes second in-channel resistant parts each arranged in proximity to one of the merging positions of the plurality of branch channels, and on a side of a merging position of a neighboring one of the plurality of branch channels with respect to the one of the merging positions as a center. The first in-channel resistant parts and the second in-channel resistance parts respectively reduce channel cross-sectional areas of the main channel and the air exhaust channel and thus temporarily inhibit supplied fluid from flowing down by surface tension. The respective channel cross-sectional areas are adjusted so that a first surface tension disruption pressure for releasing fluid from temporary inhibition of flowing down by each of the first in-channel resistant parts is greater than pressure generated by channel resistance against fluid flowing from a corresponding one of the branching positions to a corresponding one of the second in-channel resistant parts, and so that a second surface tension disruption pressure for releasing fluid from temporary inhibition of flowing down by each of the second in-channel resistant parts is greater than a sum of the first surface tension disruption pressure, pressure generated by channel resistance against fluid flowing from a corresponding one of the first in-channel resistant parts to a subsequent one of the first in-channel resistant parts, and pressure generated by channel resistance against fluid flowing from a subsequent one of the branching positions to a subsequent one of the second in-channel resistant parts.

According to the above structure, the first in-channel resistant parts are arranged on a downstream side of the branching positions in the main channel, and can temporarily inhibit fluid from flowing down in the main channel and guide fluid to the branch channels. Surface tension disruption pressure generated by each of the first in-channel resistant parts (a first surface tension disruption pressure) is adjusted to be greater than pressure generated by channel resistance against fluid flowing from a corresponding one of the branching positions to a corresponding one of the second in-channel resistant parts and to be smaller than surface tension disruption pressure of a corresponding one of the second channel resistant parts (a second surface tension disruption pressure). Therefore, when fluid pressure increases after fluid flowing in a branch channel reaches a second in-channel resistant part, surface tension is disrupted at a corresponding one of the first in-channel resistant parts and allows fluid to flow down to a subsequent one of the first in-channel resistant parts (on a downstream side of the main channel). Accordingly, fluid can be dispensed to a plurality of branch channels branching from the main channel sequentially from an upstream side to a downstream side.

On the other hand, since each of the second in-channel resistant parts is arranged in proximity to one of the merging positions of the branch channels in the air exhaust channel, fluid dispensed to a branch channel passes through the branch channel and reaches the air exhaust channel and gets temporarily inhibited from flowing down in the air exhaust channel by a second in-channel resistant part. When fluid enters a subsequent branch channel (on a downstream side of the main channel) and reaches the air exhaust channel, fluid is present in proximity to both the merging positions of the neighboring two branch channels, and both the fluid present in proximity to these two merging positions seal off a channel internal air. As a result, when fluid reaches proximity to both the merging positions of the neighboring two branch channels, fluid temporarily inhibited from flowing down by the upstream second in-channel resistant part is kept inhibited from flowing down by presence of the channel internal air sealed off on a downstream side. This is because pressure in an opposite direction is applied by the downstream second in-channel resistant part. A great pressure intensively applied to fluid on an upstream side is a difference between pressure applied to the upstream second in-channel resistant part and pressure applied to the downstream second in-channel resistant part. With respect to pressure generated by fluid supplied to a plurality of branch channels, the upstream second in-channel resistant part does not cause surface tension disruption as long as the upstream second in-channel resistant part can withstand resistant pressure generated in dispensing fluid to a subsequent branch channel. Besides, since fluid flows down to the respective branch channels sequentially from an upstream side of the main channel as mentioned before, fluid flows down to a terminal end (a merging position) of a subsequent and neighboring branch channel, receives surface tension disruption pressure (a second surface tension disruption pressure) from a second in-channel resistant part, and then further flows down in the main channel. This situation does not change whether the number of branch channels is increased or decreased.

That is to say, each of the second in-channel resistant parts only needs to have a surface tension disruption pressure (a second surface tension disruption pressure) which withstands a sum of surface tension disruption pressure generated by the first in-channel resistant part (the first surface tension disruption pressure), pressure generated by channel resistance against fluid flowing from a corresponding one of the first in-channel resistant parts to a subsequent one of the first in-channel resistant parts, and pressure generated by channel resistance against fluid flowing from a subsequent one of the branching positions to a subsequent one of the second in-channel resistant parts. Each of the second in-channel resistant parts does not need to withstand all pressure generated on a downstream side.

Therefore, the first in-channel resistant parts and the second in-channel resistant parts can be designed easily, and a large number of branch channels can be arranged without limited in number. Moreover, since formed by reducing cross sectional area, both the first in-channel resistant parts and the second in-channel resistant parts can be easily fabricated by soft lithography, etc.

Herein, each of the first in-channel resistant parts arranged in the main channel has a greater channel cross-sectional area than each of the second in-channel resistant parts arranged in the branch channels, and pressure for releasing fluid from temporary flow inhibition (surface tension disruption pressure) generated by each of the first in-channel resistant parts is smaller than that generated by each of the second in-channel resistant parts. Therefore, when fluid flowing down in the main channel gets temporarily inhibited from flowing down in proximity to a branching position by a first in-channel resistant part and enters a branch channel and gets temporarily inhibited from flowing down by a second in-channel resistant part, owing to a difference in surface tension disruption pressure, surface tension is disrupted only at the first in-channel resistant part and fluid flows down further in the main channel. Then, the fluid flowing down enters a subsequent branch channel, and channel resistance of the subsequent branch channel is added to fluid pressure. Therefore, surface tension disruption pressure of the second in-channel resistant part is adjusted to be greater than at least a sum of surface tension disruption pressure of the first in-channel resistant part, pressure generated by channel resistance to a subsequent first in-channel resistant part, and pressure generated by channel resistance of a subsequent branch channel to a subsequent second in-channel resistant part. Similarly in a subsequent order, fluid in proximity to a subsequent branching position is temporarily inhibited from flowing down by a subsequent first in-channel resistant part and supplied to a subsequent branch channel and then surface tension is disrupted at the subsequent first in-channel resistant part and fluid flows down further in the main channel. Thus, the dispensing device of the present invention can dispense fluid sequentially to all a predetermined number of branch channels.

"A branching position" of a branch channel means an entire opening of the branch channel in wall surfaces of the main channel. "Proximity" in which a first in-channel resistant part is arranged means a place next to an opening of a branch channel without interrupting the opening or located at an appropriate distance from the branching position. On the other hand, "a merging position" arranged in the air exhaust channel means an entire opening of a branch channel in wall surfaces of the air exhaust channel. "Proximity" to a merging position means a place next to the opening but not interrupting the opening, or located at an appropriate distance from the opening. "Fluid" only needs to seal off a channel internal air in the air exhaust channel and commonly the fluid is liquid-like fluid. Examples of the fluid include liquid as a simple substance, a mixture of a plurality of liquids, and a suspension containing fine particles. Microchannels are typically channels having a channel cross-sectional area of approximately 0.005-2.0 mm$^2$ and serve to transport microfluid

(about 1-500 μL of liquid-like fluid). Due to surface tension and viscous resistance against channel inner wall surfaces, etc. of microfluid, the microchannels make microfluid exhibit different behaviors from those of typical liquid transported by typical channels.

In the invention having the aforementioned structure, each of the second in-channel resistant parts can comprise a single part for forming a reduced cross section, but can also comprise a plurality of parts for forming a reduced cross section. A part for forming a reduced cross section reduces a channel cross section in order to generate surface tension disruption pressure in channel, and an assembly of the plurality of parts arranged at an appropriate distance can comprise a second in-channel resistant part. When a plurality of parts for forming a reduced cross section are employed, a channel having an ordinary cross-sectional area is disposed between neighboring two parts for forming a reduced cross section and as a result, parts for forming a reduced cross section and an ordinary channel are alternately arranged.

With this structure, fabrication by soft lithography can meet a demand for a high-level dimensional accuracy of channel cross-sectional area given by the second in-channel resistant parts without fail. That is, surface tension disruption pressure of each of the second in-channel resistant parts is determined by a channel cross-sectional area. When the channel cross-sectional area is greater than expected, surface tension is disrupted by a smaller pressure than expected surface tension disruption pressure, so a high dimension accuracy is demanded for the channel cross-sectional area. If any one of the plurality of parts for forming a reduced cross section gives a predetermined cross-sectional area (a predetermined surface tension disruption pressure), surface tension disruption pressure of a second in-channel resistant part as a whole serves as surface tension disruption pressure generated by that one part for forming a reduced cross section. Therefore, a desired surface tension disruption pressure is obtained by constituting the second in-channel resistant part, which needs to meet a demand for a high-level accuracy, with a plurality of parts for forming a reduced cross section and allowing a part which forms a smallest channel cross section to determine surface tension disruption pressure.

Note that the second in-channel resistant parts are not expected to cause surface tension disruption eventually. Therefore, even if a smallest channel cross-sectional area given by a plurality of parts for forming a reduced cross section exhibits a greater surface tension disruption pressure than expected, there arises no problem. On the contrary, a greater surface tension disruption pressure generated by each of the second in-channel resistant parts is more suitable. Since channel resistance varies with a flow rate of fluid supplied to the main channel, a greater surface tension disruption pressure generated by each of the second in-channel resistant parts allows fluid to be supplied at a higher flow rate, and even if fluid is supplied at an unstable flow rate, the dispensing device having this structure can dispense fluid suitably. In this case, the dispensing device can stably dispense even manually supplied fluid (for instance, fluid supplied by a manually-operated syringe).

In the invention having the above structure, the first in-channel resistant parts and the second in-channel resistant parts can reduce channel cross-sectional area by decreasing only widths of the main channel and the air exhaust channel, respectively, and thus temporarily inhibiting supplied fluid from flowing down by surface tension. When both the first in-channel resistant parts and the second in-channel resistant parts reduce channel cross-sectional area by decreasing only channel widths, the first and in-channel resistant parts and the second in-channel resistant parts can be fabricated with ease by soft lithography, and a mold for those parts can be formed by single patterning in photolithography.

In the invention having the above structure, each of the first in-channel resistant parts and the second in-channel resistant parts comprises one or two projections formed by bulging one or both channel inner side walls toward an opposing inner side wall, or an obstacle arranged in the main channel or the air exhaust channel.

With this structure, each of the in-channel resistant parts can form a reduced channel cross section, for example, with a gap between a projection formed by bulging one channel inner side wall and the other opposing channel inner side wall or a gap between an obstacle arranged in the main channel or the air exhaust channel and channel inner side walls. Therefore, the channel cross section can be precisely adjusted. Moreover, when opposing projections are formed by bulging both inner side walls and a gap between both the projections forms a channel, a reduced cross section is formed in an ordinary channel. In each of the structures, when the projections or the obstacles are fabricated by soft lithography, a mold for the projections or the obstacles can be formed by single patterning in photolithography.

In the invention having the above structure, each of the main channel and the air exhaust channel can have a rectangular cross section having opposing wall surfaces, and each of the first in-channel resistant parts and the second in-channel resistant parts can obtain a rectangular channel cross section by arranging the end surface of the one or two projections or the obstacle in parallel to the channel inner side wall.

In the above structure, having a rectangular cross section, each of the main channel and the air exhaust channel is easily fabricated by soft lithography. Since similarly the branch channels can have a rectangular cross section and the chamber region parts formed in the branch channels only need to be increased in width, the branch channels including the chamber region parts can also be easily fabricated by soft lithography. Besides, since the one or two projections or the obstacle forms a rectangular cross section with a gap between an end surface of the one projection or the obstacle and a channel inner side wall or a gap between both end surfaces of the two opposing projections formed by bulging both channel inner side surfaces, basically the one or two projections or the obstacle can be a rectangle projected from a channel inner side wall. Such a projection or obstacle can also be easily formed by soft lithography.

In the invention having each of the aforementioned structures, the plurality of branch channels can branch from the main channel alternately on both sides of the main channel. In this case, a distance between the branching positions of the branch channels can be decreased when compared to a distance between the branching positions of the branch channels which branch from the main channel in the same direction. Since a great number of branch channels are formed in a short main channel, a great number of reaction chambers (chamber regions) can be arranged in a smaller area.

The main channel and the air exhaust channel need not to be arranged in straight line and can have a bent or curved shape. Especially when the main channel and the air exhaust channel are arranged so as to allow fluid to flow down in concentric arcs and the branch channels are radially arranged between the main channel and the air exhaust channel, the dispensing device can be arranged in an even smaller area. That is to say, when a large number of branch channels are arranged between a straight main channel and a straight air exhaust channel, the main channel and the air exhaust channel are long. However, upon shaping the main channel and the air exhaust channel in concentric circular arcs, the dispensing device can fit within a circle having a predetermined diameter. Especially when fluid is reacted with reagents, etc. in the chamber region parts individually and reaction conditions are determined by a change in hue, saturation or lightness of color, the entire dispensing device including all the chamber region parts needs to be irradiated with light. Because the chamber region parts are aligned in a circular arc, the entire dispensing device can be almost uniformly irradiated with light from a single right source.

On the other hand, a microfluidic device according to the present invention is a microfluidic device including the fluid dispensing device having any one of the aforementioned structures according to the invention in a microchannel chip and comprising a plurality of microchannels, the microfluidic device comprising the main channel, the plurality of branch channels and the air exhaust channel constituting the fluid dispensing device, a microchannel part for supplying fluid to the main channel, a fluid inlet port for introducing fluid into the microchannel part, reaction chambers arranged respectively in the chamber region parts formed in the plurality of branch channels, and outlet ports respectively connected to terminal ends of the main channel and the plurality of branch channels and forming openings at the terminal ends.

With the above structure, when fluid introduced into a microchannel chip is dispensed into the plurality of branch channels, individual samples, etc. can be respectively fixed in reaction chambers arranged in the chamber region parts and a reagent, etc. can be dispensed into the individual reaction chambers. Moreover, primers for amplifying different causal genes associated with different infectious diseases caused by arthropod-borne viruses (e.g., Dengue fever and Zika fever) can be individually fixed in the reaction chambers, and a mixture of a gene sample collected from an arthropod and a gene amplification reagent can be dispensed into the reaction chambers. Since different reactions are thus caused in the different plurality of vessels, different reaction results can be simultaneously obtained with a single supply of fluid. Since the number of branch channels is not limited in the fluid dispensing device, inspection using a single microchannel chip is possible especially regardless of an increase in the kind of samples or the number of items to be inspected, etc. Besides, since fluid to be dispensed can be supplied manually, inspection can be easily performed anywhere. Such inspection as mentioned above is not limited to virus tests and includes gene tests for food allergens, such as wheat, buckwheat and peanuts, contained in very small amounts in processed food or illegal drugs such as cannabis.

Finally, a chip for inspection according to the present invention is a microfluidic device including the fluid dispensing device having any one of the aforementioned structures according to the invention in a microchannel chip and comprising a plurality of microchannels, the chip for inspection comprising the main channel, the plurality of channels, and the air exhaust channel constituting the fluid dispensing device, a microchannel part for supplying fluid to the main channel, a fluid inlet port for introducing fluid into the microchannel part, reaction chambers arranged in the chamber region parts formed in the plurality of branch channels, and outlet ports respectively connected to terminal ends of the main channel and the plurality of branch channels and forming openings at the terminal ends, and reagents being respectively fixed in the reaction chambers.

According to the above structure, reagents are respectively fixed in reaction chambers arranged in the chamber region parts beforehand. Therefore, reaction results with the reagents can be obtained by dispensing a sample as fluid into the respective reaction chambers. For example, different kinds of reagents which react with different pathogenic viruses, etc. are fixed in the different reaction chambers and body fluid or blood (undiluted or diluted fluid) taken from an object to be inspected (a human or an animal) is dispensed into the reaction chambers. Thus, a virus which reacts with one of the expected kinds of reagents can be identified. Such a chip for inspection can exhibit similar advantages to the aforementioned microfluidic device. Moreover, since fluid to be dispensed can be manually supplied, the present invention offers a chip which permits appropriate control of pressure for introducing fluid in accordance with the kind of fluid to be supplied, and easily perform inspection anywhere.

Advantageous Effects of Invention

In the present invention relating to the dispensing device in the microchannels, when fluid supplied to the main channel passes through the individual branch channels, gets ready to reach the air exhaust channel and the second in-channel resistant parts temporarily inhibit fluid around the merging positions in the air exhaust channel from flowing down, a channel internal air is sealed off between neighboring two merging positions. Owing to presence of the channel internal air, a condition for disrupting surface tension at a second in-channel resistant part on an upstream side is to disrupt surface tension at a second in-channel resistant part on a downstream side by way of the channel internal air. This is because transport of the channel internal air requires transport of fluid on the downstream side. For this reason, when fluid is filled up to the second in-channel resistant part on the downstream side, in order to supply fluid to a subsequent branch channel, the second in-channel resistant part on the downstream side only needs to generate surface tension disruption pressure enough to flow down against resistant pressure given by a corresponding first in-channel resistant part and pressure generated by channel resistance in the channels and eventually a plurality of second in-channel resistant parts to which fluid is filled up resist pressure required for supply of fluid into a plurality of branch channels. Therefore, even when the number of branch channels is great, a subsequent second in-channel resistant part on a downstream side sequentially resists resistant pressure in accordance with the number of branch channels, so the dispensing device capable of dispensing fluid without limited in number of branch channels can be provided by assigning an appropriate surface tension disruption pressure to each of the second in-channel resistant parts.

Besides, when surface tension disruption pressure of each of the second in-channel resistant parts is set to be remarkably greater than surface tension disruption pressure of each of the first in-channel resistant parts, surface tension at the each of the second in-channel resistant parts is inhibited from disruption regardless of whether fluid is supplied to the main channel at a relatively high flow rate, and thus the dispensing device can dispense fluid rapidly and smoothly. Although manually supplied fluid tends to have an unstable flow rate, the dispensing device can be used even at such an unstable fluid flow rate. Moreover, when each of the second in-channel resistant parts comprises a plurality of parts for forming a reduced cross section, this ensures a high dimensional accuracy to the each of the second in-channel resistant parts and therefore, secures minimum surface tension disruption pressure of the each of the second in-channel resistant parts.

Besides, in the present invention relating to the microfluidic device, when the aforementioned dispensing device is arranged in a microchannel chip and fluid such as a reagent is introduced to the main channel, the microfluidic device can dispense fluid to the plurality of branch channels and cause reactions in reaction chambers arranged in the branch channels. In addition, since the branch channels are not limited in number, the microfluidic device can have the number of reaction chambers required for reactions and be used for a variety of kinds of reaction tests. Moreover, since the microfluidic device can be used even for manually supplied fluid, reaction tests do not need a facility such as a laboratory and the microfluidic device can be appropriately used anywhere reaction tests should be performed. Moreover, if reagents are respectively fixed in the reaction chambers in the microfluidic device having the above structure beforehand, the microfluidic device can be used as a chip for inspection. When such a chip for inspection includes the number of reaction chambers required for reactions and different reagents are respectively fixed in the individual reaction chambers beforehand, the chip for inspection can perform a plurality of reaction tests simultaneously.

**Brief Description of Drawings**

[Figs. 1] Figs. 1 are explanatory views showing an embodiment according to a microfluidic device of the present invention.
[Fig. 2] Fig. 2 is an explanatory view showing an embodiment according to a dispensing device of the present invention.
[Fig. 3] Fig. 3 is an explanatory view showing that fluid is being dispensed in the dispensing device.
[Fig. 4] Fig. 4 is an explanatory view showing a state of fluid dispensed to a #1 branch channel.
[Fig. 5] Fig. 5 is an explanatory view showing a state of fluid dispensed to a #2 branch channel.
[Fig. 6] Fig. 6 is an explanatory view showing a state of fluid dispensed to a #3 branch channel.
[Fig. 7] Fig. 7 is an explanatory view showing a modification in which second in-channel resistant parts have a modified structure.
[Fig. 8] Fig. 8 is an explanatory view showing an entire structure of a dispensing device and dimensions of main parts thereof.
[Fig. 9] Fig. 9 is an explanatory view showing a dispensing device according to another modification of the embodiments of the dispensing device.
[Fig. 10] Fig. 10 is an explanatory view showing still another modification of the embodiments of the dispensing device.
[Fig. 11] Fig. 11 is an explanatory view showing a microfluidic device including the dispensing device of the modification shown in Fig. 10 in use.

## Description of Embodiments

Embodiments of the present invention will be hereinafter described with reference to the drawings. For convenience of description, first, embodiments of the microfluidic device will be described and then embodiments of the dispensing device will be described. After that, experimental results of fluid dispensing will be discussed.

*Microfluidic Device*

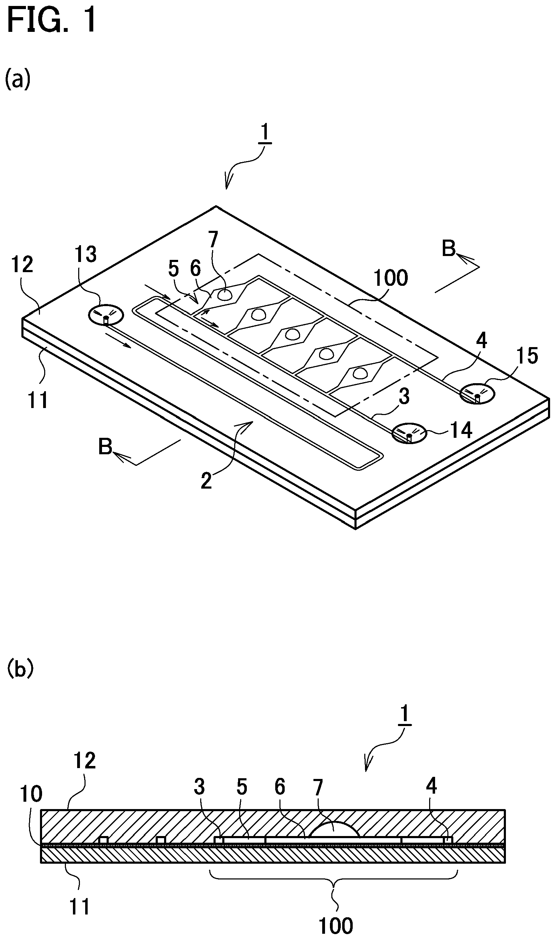

Figs. 1 show an embodiment of the microfluidic device of the present invention. Fig. 1(a) is its schematic perspective view and Fig. 1(b) is its cross-sectional view taken along line B-B. As its structure is shown in these drawings, a microfluidic device 1 includes a plurality of microchannels in a microchannel chip. The microchannels are typically flow paths each having a cross-sectional area of approximately 0.005-2.0 mm$^2$ and serve to transport microfluid (approximately 1-500 μL of liquid-like fluid).

The microfluidic device 1 of the present embodiment has a laminated structure basically formed by bonding two layers. That is, a channel-formed substrate 12 is laid on a bottom plate (a base) 11. Specifically, as shown in detail in Fig. 1(b), the channel-formed substrate 12 in which channels have been formed by soft lithography beforehand is bonded on a smooth flat upper surface of the bottom plate 11 with an adhesive tape 10.

In the present embodiment, the bottom plate 11 comprises a glass substrate and the channel-formed substrate 12 comprises silicone resin (PDMS: polydimethylsiloxane). Used as the adhesive tape 10 is a double-sided tape. In fabrication of the channel-formed substrate 12 by soft lithography, a photoresist on a silicon substrate is patterned with shape of desired channels by photolithography and by using the patterned photoresist as a mold, a silicone resin having cavities in predetermined shapes such as channel shapes is obtained.

As shown in Fig. 1(a), the plurality of microchannels formed in the channel-formed substrate 12 include a microchannel part 2 and a main channel 3 connected thereto. The microchannel part 2 is continuously connected to an inlet port 13, which reaches a surface of the channel-formed substrate 12 and forms an opening, and supplies fluid which has been introduced from the inlet port 13. The main channel 3 comprises part of a dispensing device 100, and discharges excessive fluid at its terminal end. Terminal ends of the microchannels are the terminal end of the main channel 3 and a terminal end of an air exhaust channel 4, which fluid reaches after passing through the dispensing device 100. Those terminal ends are continuously connected to outlet ports 14, 15, respectively. The outlet ports 14, 15 form openings on the surface of the channel-formed substrate 12. The outlet port 14 arranged at the main channel 3 serves to discharge not only excessive fluid but also internal air in channels. The outlet port 15 arranged at the air exhaust channel 4 mainly serves to discharge internal air in the air exhaust channel 4.

The dispensing device 100 is constituted by channels formed in the channel-formed substrate 12 and includes branch channels 5 branching from the main channel 3, and chamber region parts 6 constituting part of the branch channels 5 and increased in width. Reaction chambers 7 are respectively arranged in the chamber region parts 6. For dispensing fluid plurally, the branch channels 5 and the chamber region parts 6 sequentially branch from the main channel 3 in a downstream direction, and the individual reaction chambers 7 are respectively arranged in the plurality of chamber region parts 6. Terminal ends of the branch channels 5 are connected to a single common air exhaust channel 4.

As mentioned in detail later, the main channel 3 and the air exhaust channel 4 in the dispensing device 100 respectively include in-channel resistant parts. The in-channel resistant parts respectively reduce channel widths. The in-channel resistant parts in the main channel 3 are respectively arranged in proximity to and on a downstream side of branching positions of the branch channels 5. The in-channel resistant parts in the branch channels 5 are respectively arranged on a downstream side of regions in the air exhaust channel 4 in which the branch channels 5 merge with the air exhaust channel 4 at terminal ends. When fluid reaches an in-channel resistant part in the main channel 3, the in-channel resistant part temporarily inhibits fluid from flowing down in the main channel 3 and guides the fluid into a branch channel 5. Since the in-channel resistant part in the main channel 3 is set to give a smaller channel resistance than each of the in-channel resistant parts in the branch channels 5. Therefore, when the fluid is inhibited from flowing down around a terminal end of the branch channel 5 (a merging position with the air exhaust channel), surface tension is disrupted at the in-channel resistant part in the main channel 3 and fluid is allowed to flow down again.

Owing to the dispensing device having the above structure, whenever fluid flowing down in the main channel 3 reaches a branching position of one of the branch channels 5, a corresponding one of the in-channel resistant parts in the main channel 3 temporarily inhibits fluid from flowing down and dispenses fluid to the one of the branch channels 5 and then allows fluid to flow down in the main channel 3. It is to be noted that fluid to be transported downstream can be suspension containing microparticles, etc., not to mention liquid.

Since the embodiment of the microfluidic device has the structure mentioned above, the dispensing device can be formed in a microchannel chip and fluid introduced from the inlet port 13 can be dispensed to the plurality of branch channels 5 by way of the microchannel part 2 and the main channel 3. Besides, a plurality of reactions can be simultaneously caused in the individual reaction chambers 7 arranged in the branch channels 5 (the chamber region parts 6). As shown in Fig. 1(b), each one of the reaction chambers 7 can be integrally formed with a corresponding one of the branch channels 5 (the chamber region parts 6) and has a doom-shaped cavity in order to store necessary fluid for reaction. When transparency is provided to a ceiling of the doom-shaped cavity (or the entire channel-formed substrate 12), a reaction state can be visually checked. Upon employing a reagent which exhibits a change in hue, saturation or lightness of color in reaction, a reaction result can be easily confirmed by visual check of hue or the like after reaction.

*Basic Structure of Dispensing device*

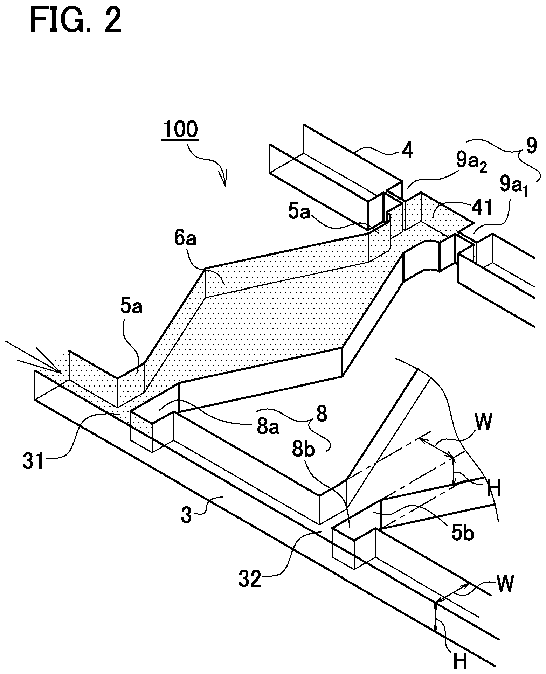

Now, the dispensing device will be described in detail. Fig. 2 illustrates a key structure of the dispensing device 100 with a focus on channels. Shaded areas in the channels indicate fluid (the same will apply hereinafter) . As shown in this drawing, a plurality of branch channels 5a, 5b ... branch off from the main channel 3 at branching positions 31, 32 .... In the present embodiment, each of the channels has a rectangular cross section and comprises two side wall surfaces opposed and in parallel to each other and a bottom surface and an upper surface in parallel to each other. The main channel 3 and the branch channels 5a, 5b ... have the same channel width W and the same channel depth H in order to have the same channel cross-sectional area.

The main channel 3 includes in-channel resistant parts (first in-channel resistant parts) 8a, 8b ... arranged respectively in proximity to and on a downstream side of the branching positions 31, 32 ... of the branch channels 5a, 5b .... The first in-channel resistant parts 8a, 8b ... are rectangular bulges of part of a side wall surface of the main channel 3, and reduce only width of the main channel 3. That is to say, the first in-channel resistant parts 8a, 8b ... reduce channel cross-sectional area when compared with those of other parts of the main channel 3.

In the present embodiment, as mentioned above, a silicone resin having cavities in predetermined shapes such as channel shapes is expected to be fabricated by patterning a photoresist on a silicon substrate with shape of desired channels by photolithography and using the patterned photoresist as a mold. Thus, the present embodiment is expected to be fabricated easily owing to convenience of patterning (a single step). Therefore, a reduction in channel cross-sectional area is attained by bulging the side wall surface and accordingly reducing only a width. However, the method of reducing the channel cross-sectional area is not limited to a reduction in width and can be any method which attains a desired channel cross-sectional area.

Since the first in-channel resistant parts 8a, 8b ... are arranged in proximity to and on a downstream side of the branching positions 31, 32 ... in the main channel 3 and thus reduce channel cross-sectional area, the first in-channel resistant parts 8a, 8b ... can temporarily inhibit fluid from flowing down by surface tension of flowing fluid. "Temporarily inhibit fluid from flowing down" means that fluid cannot flow down because fluid pressure applied by ordinary flow is smaller than resistance caused by surface tension, but that once pressure applied by fluid increases and exceeds resistance caused by surface tension, fluid flow inhibition is released, that is, surface tension is disrupted and fluid flows down.

When fluid, as mentioned above, is inhibited from flowing down by each of the first in-channel resistant parts 8a, 8b ..., fluid is guided to flow into (is dispensed to) a corresponding one of the branch channels 5a, 5b ... and supplied fluid flows into the corresponding one of the branch channels 5a, 5b .... While fluid flows down into the corresponding one of the branch channels 5a, 5b, fluid also flows down into a corresponding one of the chamber region parts 6a, 6b ... and merges with the air exhaust channel 4 at a terminal end of the corresponding one of the branch channels 5a, 5b ....

The air exhaust channel 4 basically comprises a rectangular channel similar to the main channel 3, and includes second in-channel resistant parts $9a_1$, $9a_2$ ... in proximity to merging positions 41, 42 ... at which the branch channels 5a, 5b ... merge at terminal ends. The second in-channel resistant parts $9a_1$, $9a_2$ ... are rectangular bulges of part of side wall surfaces of the air exhaust channel 4 just like the first in-channel resistant parts 8a, 8b ..., and reduce only a width of the air exhaust channel 4. Just like the first in-channel resistant parts 8a, 8b ..., the second in-channel resistant parts $9a_1$, $9a_2$ ... can reduce any dimension of the air exhaust channel 4 other than width unless the embodiment is fabricated by photolithography. Each of the second in-channel resistant parts $9a_1$, $9a_2$ ... having the structure mentioned above gives a smaller channel cross-sectional area than each of the first in-channel resistant parts 8a, 8b ..., and temporarily and remarkably inhibits fluid from flowing down in the air exhaust channel 4. As shown in Fig. 2, each of the second in-channel resistant parts $9a_1$, $9a_2$ ... comprises two projections formed by bulging both channel inner side walls and reduces channel cross-sectional area by use of a gap between both end surfaces of the opposing projections. However, each of the first in-channel resistant parts 8a, 8b ... can comprise a projection formed by bulging only one channel side wall. Similarly, each of the first in-channel resistant parts 8a, 8b ... may comprise two projections formed by bulging both channel inner side walls. Furthermore, each of the first in-channel resistant parts 8a, 8b ... and the second in-channel resistant parts $9a_1$, $9a_2$ ... can be formed by arranging an obstacle instead of the one or two projections formed by bulging the one or both side walls.

Each of the second in-channel resistant parts $9a_1$, $9a_2$ ... reduces channel cross-sectional area at a greater ratio than each of the first in-channel resistant parts 8a, 8b .... That is, regions of the air exhaust channel 4 where the second in-channel resistant parts $9a_1$, $9a_2$ ... are arranged have a smaller cross-sectional area than regions of the main channel 3 where the first in-channel resistant parts 8a, 8b ... are arranged. As a result, each of the second in-channel resistant parts $9a_1$, $9a_2$ ... gives greater channel resistance than each of the first in-channel resistant parts 8a, 8b .... This aims to make a difference in necessary pressure for releasing fluid from temporary flow inhibition (for disrupting surface tension). Accordingly, when the second in-channel resistant parts $9a_1$, $9a_2$ ... temporarily inhibit fluid from flowing down, surface tension can be disrupted at only regions of the main channel 3 where the first in-channel resistant parts 8a, 8b ... are arranged. Reduction in channel cross-sectional area by both the first in-channel resistant parts 8a, 8b ... and the second in-channel resistant parts $9a_1$, $9a_2$ ... will be discussed in detail later.

Fig. 2 shows that supplied fluid indicated by shaded areas in the drawing has been dispensed to a #1 branch channel 5a and is temporarily inhibited both from flowing down in the main channel 3 by the first in-channel resistant part 8a and from flowing down in the air exhaust channel 4 by the second in-channel resistant parts $9a_1$, $9a_2$. When fluid continues to be supplied and pressure on fluid increases, surface tension is disrupted only at a region of the main channel where the first in-channel resistant part 8a is arranged, and then fluid is to be dispensed to a #2 branch channel 5b in a subsequent order.

*Dispensing Structure of Dispensing device*

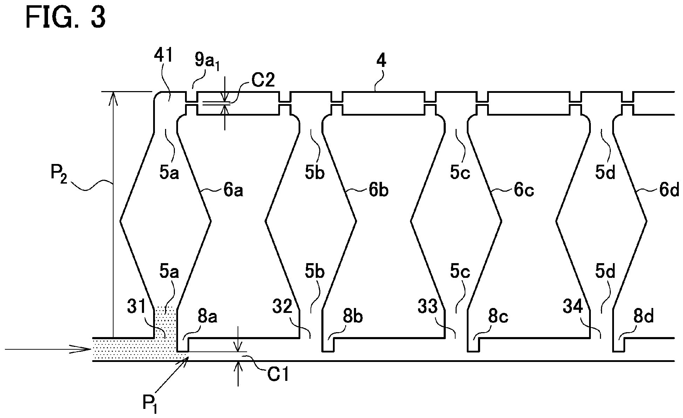

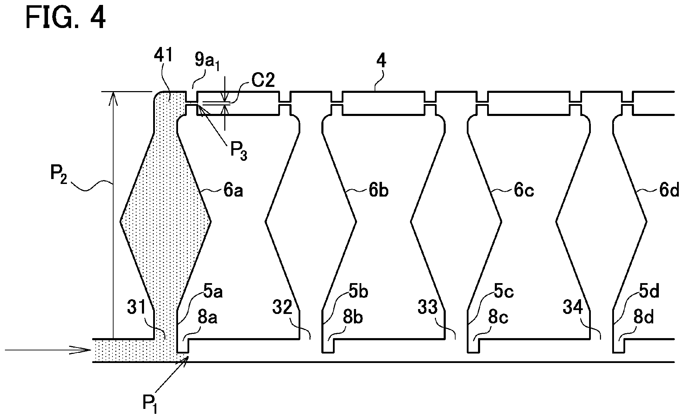

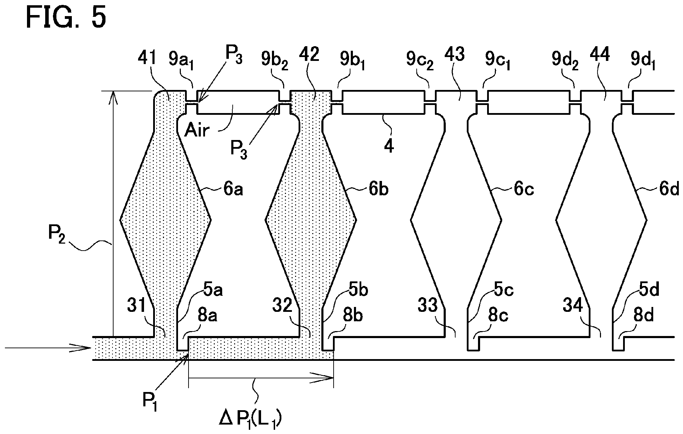

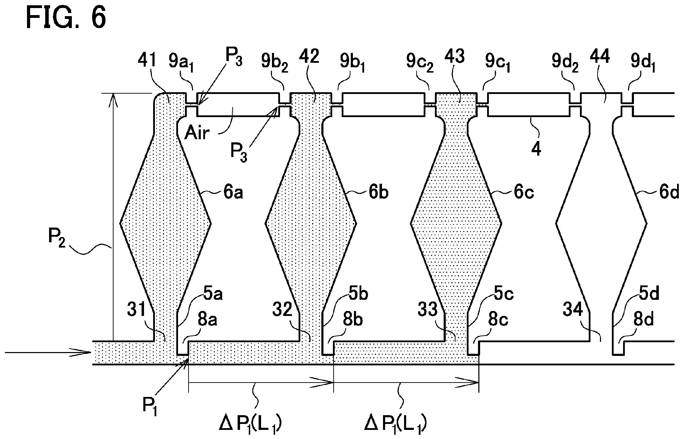

Owing to the abovementioned basic structure, fluid supplied to the main channel 3 is dispensed to one of the branch channels 5 and then further flows down in the main channel 3. Conditions for enabling these dispensing movements will now be discussed. Figs. 3 to 6 illustrate channels in which four branch channels 5a-5d branch off from the main channel 3. Fig. 3 shows that fluid is being dispensed to the #1 branch channel 5a, and Fig. 4 shows that fluid has been filled into the #1 branch channel 5a. Fig. 5 shows that fluid has been filled upto the #2 branch channel 5b, and Fig. 6 shows that fluid has been filled upto the #3 branch channel 5c.

As shown in Fig. 3, the first in-channel resistant parts 8a-8d in the main channel 3 reduce channel width into a small channel width C1. These regions of the main channel 3 have a channel cross-sectional area corresponding to the channel width C1. Therefore, when pressure above a predetermined pressure (surface tension disruption pressure) $P_1$ is applied to these regions of the main channel 3, surface tension is disrupted at the first in-channel resistant parts 8a-8d. However, when pressure on fluid is smaller than the surface tension disruption pressure $P_1$, fluid is inhibited from flowing down and dispensed to the branch channels 5a-5d. On the other hand, not having in-channel resistant parts, which reduce cross-sectional area, fluid flowing in the branch channels 5a-5d (including the chamber region parts 6a-6d) receive only pressure $P_2$ generated by channel resistance (channel friction resistance due to viscosity).

With the above structure, when fluid dispensed to the #1 branch channel 5a flows down in the branch channel 5a as shown in Fig. 4, channel cross-sectional area (a gap C1) is adjusted so that pressure $P_2$ generated by channel resistance is smaller than the surface tension disruption pressure $P_1$ given by the first in-channel resistant part 8a, that is to say, the surface tension disruption pressure $P_1$ is greater than pressure $P_2$ generated by channel resistance. Therefore, fluid is kept inhibited from flowing down by the first in-channel resistant part 8a until fluid flows down in the branch channel 5a and reaches a merging position 41 in the air exhaust channel 4, i.e., until fluid gets inhibited from flowing down by the second resistant part $9a_1$.

In addition, since the second in-channel resistant part $9a_1$ is arranged around the merging position 41 in the air exhaust channel 4 as shown in Fig. 4, surface tension disruption pressure $P_3$ given by the second in-channel resistant part $9a_1$ inhibits fluid from flowing down in the air exhaust channel 4. The second in-channel resistant part $9a_1$ reduces channel cross-sectional area at a greater ratio than the first in-channel resistant part 8a and gives a smaller channel width C2. Unless pressure above pressure (surface tension disruption pressure) $P_3$ generated by the second in-channel resistant part $9a_1$ is applied on fluid, the second in-channel resistant part $9a_1$ does not cause surface tension disruption or allow fluid to flow down in the air exhaust channel 4.

The surface tension disruption pressure $P_1$ generated by the second in-channel resistant part $9a_1$ is required to be greater than a sum of pressure applied in inhibiting fluid from flowing down by the first in-channel resistant part 8a (maximum pressure: surface tension disruption pressure $P_1$), channel resistance $\Delta P_1(L_1)$ against fluid flowing from the first in-channel resistant part 8a to a subsequent first in-channel resistant part 8b, and channel resistance $P_2$ against fluid flowing down in a subsequent branch channel 5b. This requirement aims to keep inhibiting fluid from flowing down by the second in-channel resistant part $9a_1$ and at the same time disrupt surface tension at the first in-channel resistant part 8a and dispense fluid to the subsequent branch channel 5b. When fluid continues to be supplied after reaching the second in-channel resistant part $9a_1$ and pressure on the entire fluid increases and exceeds the surface tension disruption pressure of the first in-channel resistant part 8a, fluid is dispensed to the subsequent branch channel 5b.

As shown in Fig. 5, when surface tension is disrupted at the #1 first in-channel resistant part 8a arranged in proximity to a branching position 31 of the #1 branch channel 5a in the main channel 3, fluid flowing down in the main channel 3 from the #1 first in-channel resistant part 8a receives channel resistance from the #1 first in-channel resistant part 8a to the subsequent first in-channel resistant part 8b, and is placed under pressure $\Delta P_1(L_1)$ generated by this

channel resistance. It is to be noted that since surface tension disruption pressure $P_1$ of the #2 first in-channel resistant part 8b and pressure $P_2$ generated by channel resistance of the #2 branch channel 5b are the same as those of #1, fluid pressure acting on the #1 second in-channel resistant part $9a_1$ becomes $P_1 + P_2 + \Delta P_1(L_1)$. If surface tension disruption pressure $P_3$ of the #1 second in-channel resistant part $9a_1$ is greater than the above sum, the #1 second in-channel resistant part $9a_1$ does not cause surface tension disruption and inhibits fluid from flowing down in the air exhaust channel 4.

When fluid is dispensed into the #2 branch channel 5b and filled upto a merging position 42 of the #2 branch channel 5b (second in-channel resistant parts $9b_1$, $9b_2$) as shown in Fig. 5, a channel internal air (Air) is enclosed in the air exhaust channel 4 between the #1 merging position 41 and a #2 merging position 42. The channel internal air (Air) is sealed off by fluid present at the merging positions 41, 42, which lie on both an upstream side and a downstream side of the air exhaust channel 4. Fluid at the merging positions 41, 42 respectively receive surface tension disruption pressure $P_3$ from the second in-channel resistant parts $9a_1$, $9b_2$, and is inhibited from flowing down (disrupting surface tension). Since the channel internal air (Air) is sealed off between the upstream merging position 41 and the downstream merging position 42, fluid having flown to the upstream merging position 41 (the second in-channel resistant part $9a_1$) receives pressure in an opposite direction from fluid having flown to the downstream merging position 42 (the second in-channel resistant part $9b_1$) by way of the channel internal air (Air). Fluid pressure at the #1 second in-channel resistant part $9a_1$ is expressed as $P_1 + P_2 + \Delta P_1(L_1)$, as mentioned above. The pressure in the opposite direction from fluid at the #2 second in-channel resistant part $9b_2$ is a sum of the surface tension disruption pressure $P_1$ generated by the #2 first in-channel resistant part 8b and channel resistance $P_2$ of the branch channel 5b ($P_1 + P_2$), and their pressure difference $\Delta P_1(L_1)$ acts on the #1 second in-channel resistant part $9a_1$. Therefore, under a condition in which the channel internal air (Air) is sealed off within the air exhaust channel 4 as mentioned above, the surface tension disruption pressure $P_3$ required for the #1 second in-channel resistant part $9a_1$ does not exceed the initial sum ($P_1 + P_2 + \Delta P_1(L_1)$).

This fact deserves attention especially when fluid is dispensed to subsequent (#3 and #4) branch channels 5c, 5d. That is to say, when fluid is filled upto the #3 branch channel 5c as shown in Fig. 6, fluid pressure at the #1 second in-channel resistant part $9a_1$ is added with channel resistance ($\Delta P_1(L_1)$) from the #2 branching position 32 to a #3 branching position 33 (the channel resistance is doubled). Namely, pressure $P_1 + P_2 + 2\Delta P_1(L_1)$ is applied to fluid at the #1 second in-channel resistant part $9a_1$. However, pressure $P_1 + P_2 + \Delta P_1(L_1)$ is applied to fluid at a #2 second resistant part $9b_2$. Since these pressures are applied in opposite directions by way of a channel internal air (Air) between these two second in-channel resistant parts $9a_1$, $9a_2$, only their pressure difference ($\Delta P_1(L_1)$) is applied to the upstream (#1) second in-channel resistant part $9a_1$. Consequently, as long as the surface tension disruption pressure $P_3$ of the #1 second in-channel resistant part $9a_1$ is greater than $P_1 + P_2 + \Delta P_1(L_1)$, surface tension is not disrupted. The same applies to a case where a large number of branch channels 5d ... are arranged on a downstream side. That is to say, as long as surface tension disruption pressure $P_3$ of each of second in-channel resistant parts $9a_1$, $9b_1$, $9b_2$, ... arranged in proximity to a corresponding one of merging positions 41, 42, ... in the air exhaust channel 4 satisfies the following inequality expression (Math. 1), the dispensing device of the present invention can dispense fluid to branch channels 5a, 5b, 5c, ... regardless of the number of branch channels. When fluid flows to merging positions 42, 42, ... on a downstream side and is filled upto a #n ($n \geq 3$) branch channel 5n (including a chamber region part and a merging position) and pressure applied to a #n-1 (upstream) second in-channel resistant part $9a_n$ is expressed as $P_{3(n-1)}$, the pressure is as follows (Math. 2). Accordingly, pressures applied to all second in-channel resistant parts are the same. Since these pressures are smaller than the surface tension disruption pressure $P_3$ shown in Math. 1, this indicates that surface tension is not disrupted at any of the second in-channel resistant parts.

[Math. 1]

$$P_3 > P_1 + P_2 + \Delta P_1(L_1)$$

[Math. 2]

$$P_{3(n-1)} = \{P_1 + P_2 + n\Delta P_1(L_1)\} - \{P_1 + P_2 + (n-1)\Delta P_1(L_1)\}$$

$$\therefore \ P_{3(n-1)} = \Delta P_1(L_1)$$

where n denotes the $n^{th}$ number.

As mentioned above, the surface tension disruption pressure $P_1$ to be generated by each of the first in-channel resistant parts 8a, 8b, 8c, ... must have an appropriate value for causing surface tension disruption. Besides, as is clear from the above inequality expression (Math. 1), the surface tension disruption pressure $P_1$ has to satisfy the following conditions in order to dispense fluid subsequentially into the plurality of branch channels 5a, 5b, 5c, .... These conditions are obvious, but shown for the sake of clarity.

[Math. 3]

$$\begin{cases} P_1 > P_2 \\ P_1 < P_3 \end{cases}$$

It is to be noted that when fluid is temporarily inhibited from flowing down by any one of the first in-channel resistant parts 8a, 8b, ..., and the second in-channel resistant parts $9a_1$, $9b_1$, $9b_2$, ..., surface tension is applied between front surface of fluid flow and channel inner surfaces (left and right side walls, and upper and bottom surfaces), and the front surface of fluid flow is bulged in a downstream direction. The bulge is formed at a position where reduced channel width is increased. Surface tension disruption pressures $P_1$, $P_3$ at each of the first in-channel resistant parts 8a, 8b, ..., and each of the second in-channel resistant parts $9a_1$, $9b_1$, $9b_2$, ... can be calculated based on a bulge shape and fluid viscosity coefficient. Since detailed description on how to calculate these surface tension disruption pressures is found in Japanese patent application No. 2020-190959, the description is omitted here.

With the above structure, as long as the above numerical expressions (Math. 1 and Math. 2) are satisfied, fluid is sequentially dispensed to the branch channels 5a, 5b, ... and the #1 second in-channel resistant part $9a_1$ does not cause surface tension disruption and inhibits fluid from flowing down in the air exhaust channel 4. Therefore, a large number of branch channels 5a, 5b, ... can be provided without limited in number. This is achieved by sequentially dispensing fluid to the plurality of branch channels 5a, 5b, ... from an upstream side. This one-by-one dispensing is realized by applying surface tension disruption pressure by the first in-channel resistant parts 8a, 8b, ....

*Modifications*

In the aforementioned embodiment, the surface tension disruption pressure $P_3$ generated by each of the second in-channel resistant parts $9a_1$, $9b_1$, $9b_2$, ... is a key factor in enabling fluid to be dispensed into a large number of branch channels 5a, 5b, ..., as mentioned above. In order to assign a predetermined value to surface tension disruption pressure $P_3$ generated by each of the second in-channel resistant parts $9a_1$, $9b_1$, $9b_2$, ..., the each of the second in-channel resistant parts $9a_1$, $9b_1$, $9b_2$, ... can comprise a plurality of parts for forming a reduced cross section.

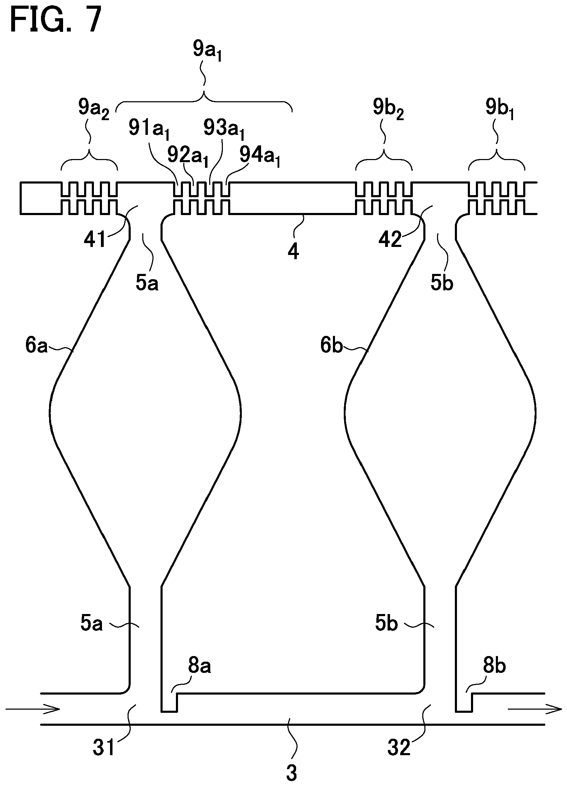

An example of this kind of structure is shown in Fig. 7. As shown in this drawing, a main channel 3, an air exhaust channel 4, branch channels 5a, 5b ... (including chamber region parts 6a, 6b, ...) and first in-channel resistant parts 8a, 8b, ... have a similar structure to those of the aforementioned embodiment, and only second in-channel resistant parts $9a_1$, $9a_2$, $9b_1$, $9b_2$, ... have a modified structure.

In this modified embodiment, each of the second in-channel resistant parts $9a_1$, $9a_2$, $9b_1$, $9b_2$, ... (hereinafter, description will be made with reference to a second in-channel resistant part $9a_1$ arranged in a downstream side of a #1 merging position 41 as a typical example) comprises, for example, four parts $91a_1$, $92a_1$, $93a_1$, and $94a_1$ for forming a reduced cross section. Each of the parts $91a_1$-$94a_1$ for forming a reduced cross section reduces cross-sectional area by bulging both channel side walls and using a gap between end surfaces of the bulges, and has a similar structure to the second in-channel resistant part $9a_1$ comprising a single pair of projections. The plurality of parts $91a_1$-$94a_1$ for forming a reduced cross section are arranged in a downstream direction at appropriate distances in an air exhaust channel 4, and channel widths at intervals of the parts $91a_1$-$94a_1$ for forming a reduced cross section are the same as that of the air exhaust channel 4 (i.e., channel cross-sectional area at the intervals is ordinary). If surface tension is disrupted at the most-upstream part $91a_1$ for forming a reduced cross section, surface tension disruption pressure $P_3$ generated by the subsequent part $92a_1$ for forming a reduced cross section can serve the function.

The parts $91a_1$-$94a_1$ for forming a reduced cross section thus arranged do not increase surface tension disruption pressure $P_3$ as a whole. That is to say, when pressure applied to the second in-channel resistant part $9a_1$ exceeds this

surface tension disruption pressure $P_3$, surface tension is disrupted at the most-upstream part $91a_1$ for forming a cross section. Since the pressure is similarly applied to the subsequent part $92a_1$ for forming a reduced cross section, surface tension disruption cannot be inhibited at the subsequent part $92a_1$ for forming a reduced cross section. The reason why the plurality of parts $91a_1$-$94a_1$ for forming a reduced cross section are arranged regardless of this fact is to obtain surface tension disruption pressure $P_3$ without fail.

That is to say, in order to form projections or obstacles in channels to reduce cross-sectional area to a predetermined channel cross-sectional area, these projections or obstacles must be fabricated with precision. However, since these projections or obstacles in microchannels have very small dimensions, precision control is not easy. For example, fabrication of these projections or obstacles by soft lithography requires two-step control of precision: precision of a mold formed by patterning a photoresist on a silicon substrate by photolithography and precision of channels formed by use of the mold. When each of the second in-channel resistant parts $9a_1$, ..., which affect performance of the fluid dispensing device, comprises the plurality of parts $91a_1$-$94a_1$ for forming a reduced cross section and at least one of these parts has a predetermined channel width, these parts as a whole can exhibit the predetermined surface tension disruption pressure $P_3$.

Note that in this modified embodiment, a second in-channel resistant part $9a_2$ is also arranged in proximity to and on an upstream side of the merging position 41 of the #1 branch channel 5a. An end of the air exhaust channel 4 on an upstream side of the merging position 41 of the #1 branch channel 5a is basically closed and fluid does not flow down to the end. Therefore, there is no special need to arrange the second in-channel resistant part $9a_2$, as shown in the aforementioned embodiment. When the merging positions 41, 42, ... of the branch channels 5a, 5b, ... have the same structure because of easiness in designing a fluid dispensing device, there is no harm in arranging the second in-channel resistant part $9a_2$. In this case, when fluid enters the merging position 41, fluid fills up entire space at the merging position 41 and a channel internal air is sealed off on an upstream side of the second in-channel resistant parts $9a_2$. Fluid cannot flow down to the end beyond the sealed internal air. This situation is substantially the same as a closed end.

## Examples

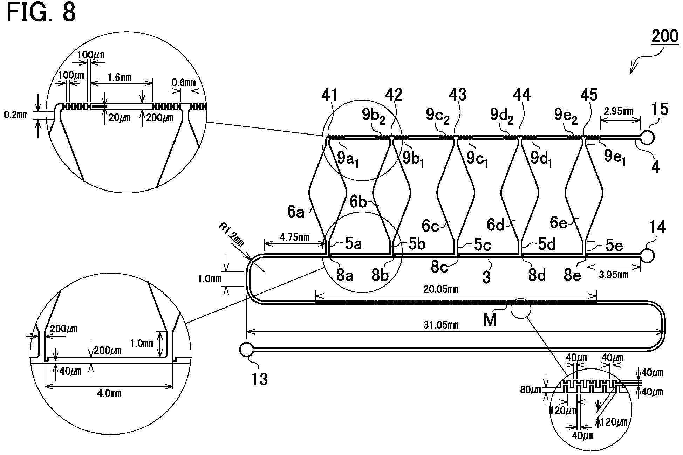

An actual fluid dispensing device was fabricated based on the aforementioned modified embodiment and subjected to a dispensing experiment. First, structure of the fabricated fluid dispensing device will be described. A schematic view of the fluid dispensing device is shown in Fig. 8. As shown in this drawing, the fluid dispensing device 200 for an experiment includes four branch channels 5a-5e, and a main channel 3 is specially provided with a mixing channel M. It should be noted that the fluid dispensing device 200 does not employ a second in-channel resistant part $9a_2$ on an upstream side of a merging position 41 of a #1 branch channel 5a in an air exhaust channel 4 (the structure of the embodiment).

Dimensions of main parts of channels in this structure are given in Fig. 8. Although not shown in the drawing, all channels have a depth (H) of 50 $\mu$m. As is clear from the dimensions given in the drawing, channels fabricated in this example are microchannels as mentioned above, and largest channels (the main channel 3 and others) have a width W of 200 pm, a depth H of 50 $\mu$m, and a channel cross-sectional area of 0.01 mm$^2$ (within the range of 0.005 to 2.0 mm$^2$). Most remarkably, each of first in-channel resistant parts 8a-8e forms a gap of 40 $\mu$m between a projection and a channel side wall opposing to the projection and accordingly forms a channel cross-sectional area of 0.002 mm$^2$. On the other hand, each of second in-channel resistant parts $9a_1$-$9e_2$ forms a gap of 20 $\mu$m between end surfaces of opposing projections and accordingly forms a channel cross-sectional area of 0.001 mm$^2$. These extremely small channel cross-sectional areas allow an increase in surface tension disruption pressure.

*Dispensing Experiment*

The fluid dispensing device 200 thus fabricated was subjected to a dispensing experiment. A substrate having channels was formed of silicone resin and an adhesive tape used for bonding the channel-formed substrate with a glass substrate was a double-sided tape No. 5303W produced by Nitto Denko Corporation in Japan. Water was used as fluid to be dispensed and supplied from an inlet port 13 at a constant flow rate of 50 pL/min. As a result, water was dispensed to the five branch channels 5a-5e (including chamber region parts 6a-6e), and surface tension was never disrupted at any of the second in-channel resistant parts $9a_1$-$9e_2$.

Similarly, a dispensing device having twice as many branch channels as the above dispensing device, i.e., ten branch channels was fabricated as a trial and water was similarly supplied at a constant flow rate of 50 pL/min. A distance between neighboring two branch channels was the same as that of the above example, and first and second in-channel resistant parts have the same structures as those of the above example, except that only the main channel was extended. In this case, too, water was dispensed to all the branch channels and a phenomenon of surface tension disruption didn't occur at any of the second in-channel resistant parts.

Moreover, fluid (water) was manually introduced into the dispensing devices having the aforementioned two kinds of branch channels for experiments. Due to manual supply of fluid (water), fluid flow rate was assumed to be unstable, but an average fluid flow rate was about 45 pL/min when calculated on a base of time taken from a start to an end of fluid supply. In this case, too, fluid was dispensed to all the branch channels of both the dispensing devices and a phenomenon of surface tension disruption did not occur at any of the second in-channel resistant parts.

For informational purposes only, a theoretical surface tension disruption pressure ($P_3$) at each of the second in-channel resistant parts 9 is 8.06 kPa, and a theoretical value of a sum of pressures ($P_1 + P_2 + \Delta P_1(L_1)$) acting on fluid at a flow rate of 50 pL/min is 5.90 kPa. Therefore, these two values satisfy the aforementioned inequality expression (Math. 1) and it has turned out that dispensing of fluid is also theoretically possible. In theory, when a sum of pressures acting on fluid ($P_1 + P_2 + \Delta P_1(L_1)$) is 8.06 kPa, a flow rate is about 66 pL/min. Therefore, it is assumed that fluid supplied at a flow rate of 80 pm/min or less can be dispensed by the fluid dispensing devices for experiments having the structures mentioned above without any problems. If a distance between two neighboring branch channels is decreased, channel resistance $\Delta P_1(L_1)$ can be decreased and fluid can be dispensed at an increased flow rate. In addition, since a change in reduced cross-sectional area given by each of the first in-channel resistant parts 8 or the second in-channel resistant parts 9 results in a change in conditions for satisfying the above inequality expression (Math. 1), an even more increase in flow rate can be expected.

The above experimental results show that the dispensing devices of the examples dispensed fluid (water) supplied at a flow rate of 50 $\mu$L/min without any problems. This demonstrates that it is possible to fabricate a dispensing device capable of dispensing fluid supplied manually at an ordinary flow rate of approximately 45 $\mu$L/min. Although the aforementioned pressures ($P_1$, $P_2$, $\Delta P_1(L_1)$, $P_3$) depend on channel dimensions, it is determined that at least a dispensing device according to the present invention comprising channels with the dimensions mentioned above can dispense fluid supplied at an appropriate flow rate into all branch channels.

*Conclusion*

In summary, the fluid dispensing devices of the aforementioned example and modified example can sequentially dispense fluid supplied to the main channel 3 to the branch channels 5 from an upstream side and, when a plurality of reaction tests are to be simultaneously conducted, the fluid dispensing devices of the aforementioned example and modified example can perform different tests in different reaction chambers by individually dispensing the same supplied fluid into the different reaction chambers.

In this case, the first in-channel resistant parts 8 and the second in-channel resistant parts 9 reduce channel cross-sectional area and temporarily inhibit supplied fluid from flowing down by surface tension of fluid, and supplied fluid can be dispensed into the branch channels 5 only under a condition mentioned in the above inequality expression [Math. 1] that surface tension disruption pressure $P_3$ generated by each of the second in-channel resistant parts 9 is greater than a sum of surface tension disruption pressure $P_1$ generated by a corresponding one of the first in-channel resistant parts 8, pressure $\Delta P_1(L_1)$ generated by channel resistance against fluid flowing from a corresponding one of the branching positions to a subsequent one of the first in-channel resistant parts 8, and pressure $P_2$ generated by channel resistance against fluid to be dispensed into a subsequent branch channel flowing to a subsequent one of the second in-channel resistant parts 9. This condition differs with dimensions which determine cross-sectional areas (width in particular) and with a flow rate of fluid supplied to the main channel 3. If a flow rate of supplied fluid is appropriately controlled in accordance with designed channel cross-sectional areas, the fluid can be dispensed to a large number of branch channels.

Besides, a microfluidic device including the dispensing device can be easily fabricated by soft lithography. Since the in-channel resistant parts 8, 9 are fabricated only by reducing channel widths, that is, by controlling channel widths, an improved dimensional accuracy is easily attained by soft lithography. In view of the fact that surface tension disruption pressures $P_1$, $P_3$ generated by each of the first in-channel resistant parts 8 and each of the second in-channel resistant parts 9 have a great effect on dispensing performance, an improvement in dimensional accuracy of the in-channel resistant parts 8, 9 directly affect dispensing accuracy, and use of soft lithography ensures very high quality of a dispensing device or a microfluidic device to be fabricated.

*Other Modifications*

Although the embodiments and examples of the present invention are as described above, the aforementioned structures are just examples of the present invention and the present invention is not limited to these embodiments and the like. Therefore, the aforementioned structures can be modified to other structures. For instance, although the aforementioned microfluidic devices employ a glass substrate as a raw material of the bottom plate (a base) 11, a silicone resin as a raw material of the channel-formed substrate 12, and a double-sided tape as the adhesive tape 10, these raw materials and the like only need to be appropriately selected and can be replaced with others. The reaction chambers 7 used have a dome shape for the convenience of description, but their shapes or structures are appropriately changeable.

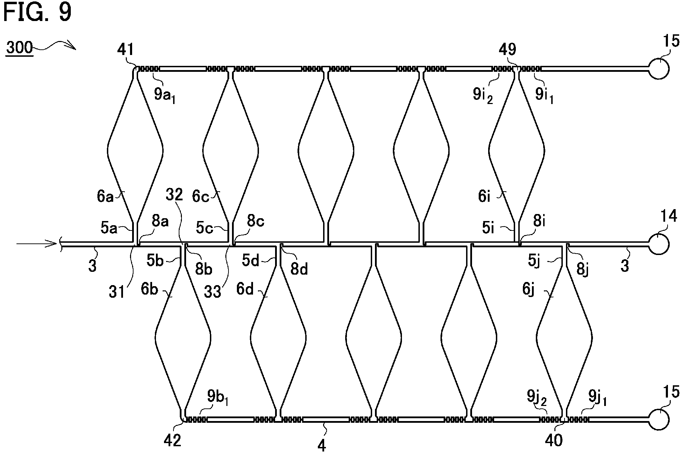

Moreover, although branching in the same direction from the main channel 3 in the aforementioned embodiments, the plurality of branch channels 5a, 5b ... do not need to branch from the main channel 3 in the same direction. For instance, a modification shown in Fig. 9 is employable. A fluid dispensing device 300 includes a plurality of branch channels 5a, 5b ... branching from a main channel 3 alternately on both sides of the main channel 3.

In this fluid dispensing device 300, air exhaust channels 4 are respectively arranged on both sides of the main channel 3, and individual neighboring branch channels 5a, 5c, ..., 5i on one side of the main channel 3 and individual neighboring branch channels 5b, 5d, ..., 5j on the other side of the main channel 3 respectively merge with the common air exhaust channels 4. With this structure, a #2 branch channel 5b can branch at an intermediate position between branch channels 5a, 5c branching in the same direction. Therefore, as shown in Fig. 9, the main channel 3 can have twice as many branch channels 5 as a main channel 3 having branch channels 5 on only one side thereof without much changing length of the main channel 3 (length of part of the main channel 3 where the branch channels 5 are connected).

In this case, fluid pressure applied to second in-channel resistant parts $9a_1$, $9c_1$, $9c_2$, ... arranged around neighboring merging positions 41, 43 in a common air exhaust channel 4 is determined in relation to neighboring branch channels 5. Therefore, channel dimensions can be determined in a similar way to those of a dispensing device having branch channels 5 on only one side of the main channel 3. More specifically, for instance, a #1 branch channel 5a and a #3 branch channel 5c are adjacent to each other, and a branching position 32 of a #2 branch channel 5b branching in an opposite direction is located between the branching positions 31, 33. Presence of this branch channel 5b, however, does not affect fluid pressure acting on the second in-channel resistant part $9a_1$. Therefore, even when branch channels 5 are arranged alternately as shown in Fig. 9, channel dimensions can be determined in relation to neighboring branch channels 5.

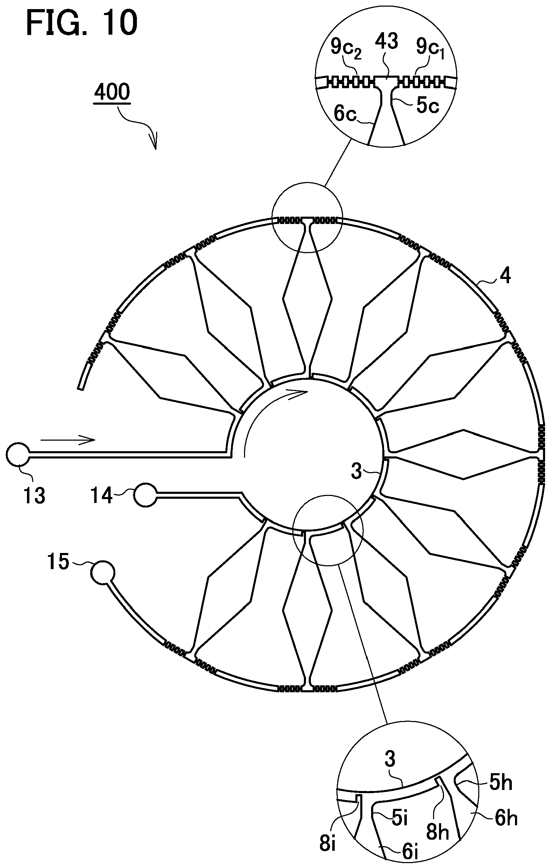

For a similar reason, a fluid dispensing device 400 as shown in Fig. 10 can be formed by arranging a main channel 3 and an air exhaust channel 4 in concentric circular arcs having different diameters and locating branch channels 5 therebetween. Also in this modification, fluid supplied to the main channel 3 is dispensed to the individual branch channels 5 and flows down to merging positions in the common air exhaust channel 4. In such a modification, the main channel 3 is preferably arranged in a smaller arc in order to decrease a distance (channel length) between neighboring first in-channel resistant parts 8 in the main channel 3 and thereby decrease their channel resistance. However, positions of the main channel 3 and the air exhaust channel 4 can be replaced with each other.

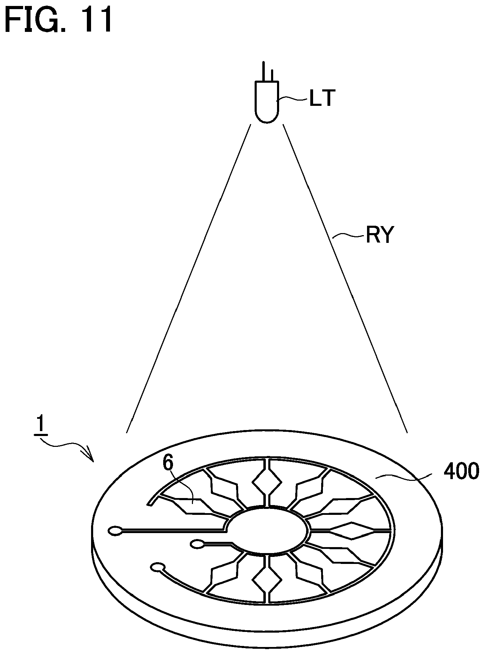

With the structure mentioned above, the dispensing device 400 as a whole can fit within a circle having a predetermined diameter. When a microfluidic device 1 includes the dispensing device 400 as shown in Fig. 11 and is subjected to a reaction test by dispensing fluid, chamber region parts 6 are concentrically arranged about a center point. Therefore, when reaction results are confirmed by checking hue or the like, the hue or the like can be checked by radiating light rays RY from a single light source LT. That is to say, the light rays RY emitted radially from the light source LT are incident on a surface of the microfluidic device 1 in a circular shape. When the entire dispensing device 400 is placed in a circular irradiation area, a change in hue or the like of color can be clearly confirmed because light rays are not emitted from a plurality of light sources having different features, and emitted light intensity is almost uniform. Ring-shaped lighting equipment as the light source LT is expected to exhibit a similar advantageous effect. The ring-shaped lighting equipment may comprise LEDs having the same output and arranged in a circular shape.

Description has been made with a focus on the structures of the microfluidic devices in the embodiments and modifications mentioned above, and each of the microfluidic devices can comprise a microchip for inspection by fixing reagents in rection vessels in chamber region parts beforehand. In this case, a plurality of tests can be simultaneously performed by fixing different reagents in the different reaction chambers and dispensing a single sample to be tested. In use of this type of chip for inspection, test results can be easily obtained only by observing which reagent the sample fluid has reacted with.

**Reference Signs List**

1 Microfluidic Device
2 Microchannel Part
3 Main Channel
4 Air Exhaust Channel
5, 5a, 5b, 5c, 5d, 5e, 5i, 5j Branch Channels
6, 6a, 6b, 6c, 6d, 6e, 6i, 6j Chamber Region Parts
7 Reaction Chambers
8, 8a, 8b, 8c, 8d, 8e, 8i, 8j First In-Channel Resistant Parts
9, $9a_1$, $9a_2$, $9b_1$, $9b_2$, $9c_1$, $9c_2$, $9d_1$, $9d_2$, $9e_1$, $9e_2$, $9i_1$, $9i_2$, $9j_1$, $9j_2$ Second In-channel Resistant Parts

10 Adhesive Tape
11 Bottom Plate (Base)
12 Channel-Formed Substrate
13 Inlet Port
14, 15 Outlet Ports
31, 32, 33, 34 Branching Positions
40, 41, 42, 43, 44, 45 Merging Positions
$91a_1$, $92a_2$, $93a_1$, $94a_1$ Parts for Forming a Reduced Cross Section
100, 200, 300, 400 Dispensing devices

**Claims**

1. A fluid dispensing device in microchannels, comprising a main channel allowing fluid to flow down in one direction, a plurality of branch channels branching from the main channel, and a common air exhaust channel with which the plurality of branch channels merge at terminal ends, and dispensing fluid flowing down in the main channel sequentially to the plurality of branch channels from an upstream side of the main channel, wherein

   the main channel includes first in-channel resistant parts arranged respectively in proximity to and on a downstream side of branching positions of the plurality of branch channels,
   the plurality of branch channels respectively include chamber region parts increased in channel cross-sectional area between the branching positions in the main channel and merging positions in the air exhaust channel,
   the air exhaust channel includes second in-channel resistant parts each arranged in proximity to one of the merging positions of the plurality of branch channels, and on a side of a merging position of a neighboring one of the plurality of branch channels with respect to the one of the merging positions as a center, and
   the first in-channel resistant parts and the second in-channel resistance parts respectively reduce channel cross-sectional areas of the main channel and the air exhaust channel and thus temporarily inhibit supplied fluid from flowing down by surface tension, and the respective cross-sectional areas are adjusted so that a first surface tension disruption pressure for releasing fluid from temporary inhibition of flowing down by each of the first in-channel resistant parts is greater than pressure generated by channel resistance against fluid flowing from a corresponding one of the branching positions to a corresponding one of the second in-channel resistant parts, and so that a second surface tension disruption pressure for releasing fluid from temporary inhibition of flowing down by each of the second in-channel resistant parts is greater than a sum of the first surface tension disruption pressure, pressure generated by channel resistance against fluid flowing from a corresponding one of the first in-channel resistant parts to a subsequent one of the first in-channel resistant parts, and pressure generated by channel resistance against fluid flowing from a subsequent one of the branching positions to a subsequent one of the second in-channel resistant parts.

2. The fluid dispensing device according to claim 1, wherein the first in-channel resistant parts and the second in-channel resistant parts reduce channel cross-sectional area by decreasing only widths of the main channel and the air exhaust channel, respectively, and thus temporarily inhibit supplied fluid from flowing down by surface tension.

3. The fluid dispensing device according to claim 2, wherein each of the first in-channel resistant parts and the second in-channel resistant parts comprises one or two projections formed by bulging one or both channel inner side walls toward an opposing inner side wall, or an obstacle arranged in the main channel or the air exhaust channel.

4. The fluid dispensing device according to claim 3, wherein each of the first in-channel resistant parts and the second in-channel resistant parts obtains a desired cross-sectional area by controlling a gap between an end surface of the one projection or the obstacle and a channel inner side wall opposing to the end surface, or a gap between both end surfaces of the two projections when formed by bulging both the inner side walls.

5. The fluid dispensing device according to claim 4, wherein each of the main channel and the air exhaust channel has a rectangular cross section having opposing wall surfaces, and each of the first in-channel resistant parts and the second in-channel resistant parts obtains a rectangular channel cross section by arranging the end surface of the one or two projections or the obstacle in parallel to the channel inner side wall.

6. The fluid dispensing device according to any one of claims 1 to 5, wherein each of the second in-channel resistant parts comprises a plurality of parts for forming a reduced cross section.

7. The fluid dispensing device according to any one of claims 1 to 5, wherein the plurality of branch channels branch from the main channel alternately on both sides of the main channel.

8. The fluid dispensing device according to any one of claims 1 to 5, wherein the main channel and the air exhaust channel are arranged so as to allow fluid to flow down in concentric arcs, and the plurality of branch channels are arranged radially between the main channel and the air exhaust channel.

9. A microfluidic device including a plurality of microchannels constituting the fluid dispensing device according to any one of claims 1 to 5 in a microchannel chip,
the microfluidic device comprising the main channel, the plurality of branch channels and the air exhaust channel constituting the fluid dispensing device, a microchannel part for supplying fluid to the main channel, a fluid inlet port for introducing fluid into the microchannel part, reaction chambers arranged respectively in the chamber region parts formed in the plurality of branch channels, and outlet ports respectively connected to terminal ends of the main channel and the plurality of branch channels and forming openings at the terminal ends.

10. The microfluidic device according to claim 9, wherein each of the second in-channel resistant parts comprises a plurality of parts for forming a reduced cross section.

11. The microfluidic device according to claim 9, wherein the plurality of branch channels branch from the main channel alternately on both sides of the main channel.

12. The microfluidic device according to claim 9, wherein the main channel and the air exhaust channel are arranged so as to allow fluid to flow down in concentric arcs, and the plurality of branch channels are arranged radially between the main channel and the air exhaust channel.

13. A chip for inspection including a plurality of microchannels constituting the fluid dispensing device according to any one of claims 1 to 5 in a microchannel chip,

the chip for inspection comprising the main channel, the plurality of channels, and the air exhaust channel constituting the fluid dispensing device, a microchannel part for supplying fluid to the main channel, a fluid inlet port for introducing fluid into the microchannel part, reaction chambers arranged in the chamber region parts formed in the plurality of branch channels, and outlet ports respectively connected to terminal ends of the main channel and the plurality of branch channels and forming openings at the terminal ends, and
reagents being respectively fixed in the reaction chambers.

14. The chip for inspection according to claim 13, wherein each of the second in-channel resistant parts comprises a plurality of parts for forming a reduced cross section.

15. The chip for inspection according to claim 13, wherein the plurality of branch channels branch from the main channel alternately on both sides of the main channel.

16. The chip for inspection according to claim 13, wherein the main channel and the air exhaust channel are arranged so as to allow fluid to flow down in concentric arcs, and the plurality of branch channels are arranged radially between the main channel and the air exhaust channel.

# FIG. 1

(a)

(b)

# FIG. 2

FIG. 3

FIG. 4

## FIG. 5

## FIG. 6

# FIG. 7

# FIG. 8

FIG. 9

## FIG. 10

FIG. 11

## INTERNATIONAL SEARCH REPORT

| International application No. |
| --- |
| **PCT/JP2022/047386** |

**A. CLASSIFICATION OF SUBJECT MATTER**

*G01N 35/08*(2006.01)i; *B01J 19/00*(2006.01)i; *B81B 1/00*(2006.01)i; *G01N 37/00*(2006.01)i
FI:   G01N35/08 F; B01J19/00 321; B81B1/00; G01N37/00 101

According to International Patent Classification (IPC) or to both national classification and IPC

**B. FIELDS SEARCHED**

Minimum documentation searched (classification system followed by classification symbols)

    G01N35/08; B01J19/00; B81B1/00; G01N37/00

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | 夏原大悟ほか,節足動物媒介性ウイルスのオンチップ感染症診断デバイスの開発 (第2報), 2018年度精密工学会秋季大会学術講演会講演論文集, 20 August 2018, G02-12, pp. 772-773<br>entire text, (NATSUHARA, Daigo et al. Development of Chip-Based Microfluidic Device for Diagnosis of Arbovirus Infections.), non-official translation (Lecture proceedings of academic lecture of 2018 JSPE Autumn Conference) | 1-16 |
| A | JP 2008-281500 A (NATIONAL INSTITUTE OF ADVANCED INDUSTRIAL & TECHNOLOGY) 20 November 2008 (2008-11-20)<br>entire text | 1-16 |
| A | JP 2010-57403 A (SHIMADZU CORP) 18 March 2010 (2010-03-18)<br>entire text | 1-16 |
| A | WO 2019/082902 A1 (UNIVERSITY OF YAMANASHI) 02 May 2019 (2019-05-02)<br>entire text | 1-16 |
| A | JP 2009-284769 A (SONY CORP) 10 December 2009 (2009-12-10)<br>entire text | 1-16 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **27 February 2023** | **14 March 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/047386**

### C.    DOCUMENTS CONSIDERED TO BE RELEVANT

| Category* | Citation of document, with indication, where appropriate, of the relevant passages | Relevant to claim No. |
|---|---|---|
| P, A | JP 2022-80026 A (TECHNOPRO INC) 27 May 2022 (2022-05-27)<br>entire text | 1-16 |

Form PCT/ISA/210 (second sheet) (January 2015)

## INTERNATIONAL SEARCH REPORT
### Information on patent family members

International application No.

**PCT/JP2022/047386**

| Patent document cited in search report | | | Publication date (day/month/year) | Patent family member(s) | Publication date (day/month/year) |
|---|---|---|---|---|---|
| JP | 2008-281500 | A | 20 November 2008 | (Family: none) | |
| JP | 2010-57403 | A | 18 March 2010 | (Family: none) | |
| WO | 2019/082902 | A1 | 02 May 2019 | US 2020/0341021 A1 entire text | |
| JP | 2009-284769 | A | 10 December 2009 | (Family: none) | |
| JP | 2022-80026 | A | 27 May 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009284769 A

- JP 2020190959 A

**Non-patent literature cited in the description**

- Lecture proceedings of academic lecture. *2018 JSPE Autumn Conference, G02-12,* 772-773